**Europäisches Patentamt**

**European Patent Office**

**Office européen des brevets**

(19)

(11) Numéro de publication: **0 143 710 B1**

(12) **FASCICULE DE BREVET EUROPEEN**

(45) Date de publication du fascicule du brevet:
16.08.89

(51) Int. Cl.⁴: **A 01 K 61/00**

(21) Numéro de dépôt: **84402380.4**

(22) Date de dépôt: **21.11.84**

(54) Dispositif d'élevage de larves d'animaux se développant en milieu aquatique.

(30) Priorité: **21.11.83 FR 8318519**

(43) Date de publication de la demande.
**05.06.85 Bulletin 85/23**

(45) Mention de la délivrance du brevet:
**16.08.89 Bulletin 89/33**

(84) Etats contractants désignés:
**AT BE CH DE FR GB IT LI LU NL SE**

(56) Documents cités:
**FR-A- 2 267 704**
**US-A- 3 693 591**
**US-A- 4 249 480**

(73) Titulaire: **Etablissement public dit: INSTITUT NATIONAL DE LA RECHERCHE AGRONOMIQUE.** 149, rue de Grenelle, F-75341 Paris Cedex 07 (FR)

(72) Inventeur: **Charlon, Nicole, Résidence Zaizquibel Bâtiment B2, Rue Jean Petit de Bas F-64200 Biarritz (FR)**
Inventeur: **Bergot, Pierre, Maison Mendibela, F-64480 Ustaritz (FR)**

(74) Mandataire: **Phélip, Bruno et al, c/o Cabinet Harlé & Phélip 21, rue de La Rochefoucauld, F-75009 Paris (FR)**

## Description

La présente invention appartient au domaine de l'élevage dans des milieux aquatiques. Elle vise plus précisément un dispositif destiné à l'élevage de larves d'animaux aquatiques dans leur stade précoce de développement. Le terme larve est employé ici et dans ce qui suit au sens large pour désigner les animaux aquatiques ou semi-aquatiques depuis le moment où ils sont capables de s'alimenter jusqu'au moment où ils ont acquis les caractéristiques de l'adulte. Par larves d'animaux aquatiques on entend les larves de poissons, de crustacés, d'insectes, qui ne sont pas nécessairement aquatiques dans leur phase ultérieure de développement, ainsi que toutes les larves non fixées d'animaux se développant totalement ou partiellement en milieu aquatique. Le dispositif de l'invention est plus spécialement applicable aux larves d'animaux aquatiques présentant une taille inférieure à 10 mm.

Mis à part l'élevage des larves de certains poissons, tels que les larves des truites et des saumons, dont la taille moyenne initiale est supérieure à 1,6 cm, il n'était pas possible jusqu'à présent d'élever des larves d'animaux aquatiques en leur fournissant comme premier aliment des aliments artificiels. Dans la technique antérieure, en effet, il était nécessaire d'utiliser du zooplancton produit en milieu naturel, ou bien un petit nombre d'espèces ou proies élevées en milieu contrôlé, cette technique étant plus spécialement utilisée pour les larves de poissons marins.

En ce qui concerne les larves de crevettes, le brevet US-A-4 249 480 (Dugan) décrit un appareil et un procédé dans lequel on réalise la séparation des larves qui viennent d'éclore et ne s'alimentent pas encore, de façon à éviter en priorité que les petites larves ne soient consommées par les adultes. On notera que ces changements n'ont lieu qu'une fois dans la vie des larves, et que ce dispositif ne se rapporte qu'à un piège pour ces larves et ne décrit ni ne suggère une alimentation quelconque des larves en leur fournissant des aliments artificiels et/ou naturels. Ce brevet enseigne également le renouvellement journalier du milieu de culture des larves pour éviter les problèmes d'infestation. Dans ce but sont prévus des moyens relatifs (drainage et grille) à l'intérieur du bac d'élevage des larves. Par ailleurs la demande de brevet FR-A-2 267 704 (Penlae) se rapporte à un procédé d'élevage de petits crustacés, en mettant en œuvre un système en eau stagnante où le développement du phytoplancton est stimulé par une fertilisation au moyen d'algues. Le brevet US-A-3 693 591, pour sa part, décrit un dispositif destiné à protéger, dans un élevage, les jeunes des adultes, et ne fait aucune référence à une alimentation ni à un élevage.

Les échecs nombreux constatés d'emblée ou bien les échecs subis lors d'essais répétitifs subséquents à quelques succès sporadiques, dans les tentatives d'élevage de larves d'animaux aquatiques présentant une taille inférieure à 10 mm, à l'aide d'aliments artificiels, sont plus particulièrement dus aux conditions sanitaires des installations ou bacs d'élevage, conditions qui se détériorent par la présence de faune, par exemple de petites larves parasites, de microflore, par l'infestation d'aliments frais, ainsi que par la fermentation des détritus provenant des aliments non mangés et des déjections de la faune et de la flore. Il se produit donc une pollution avec foyers infectieux, due également à la prolifération des champignons sur les particules inertes du milieu d'élevage. Dans la technique antérieure, les efforts pour résoudre ce problème ont porté essentiellement sur le choix et la nature de l'aliment. On a également essayé de nettoyer périodiquement les bacs d'élevage afin d'empêcher le développement des infestations nuisibles, mais ces tentatives n'ont pas été couronnées de succès à cause de la difficulté de transvaser les larves d'un bac pollué dans un bac propre, du fait de l'impossibilité de siphonnage efficace du milieu aquatique pollué sans entraîner des larves ni les blesser. Il n'était donc pas possible jusqu'à présent d'utiliser comme premier aliment des aliments inertes stockables, comme en salmoniculture intensive, pour élever de petites larves d'animaux aquatiques. C'est l'un des problèmes que se propose de résoudre la présente invention.

L'objet de l'invention est de fournir un dispositif destiné à l'élevage de larves d'animaux aquatiques dans leur stade précoce de développement, et à permettre l'interruption du développement de la microflore et/ou des parasites par changement de milieu des larves, ce dispositif comportant:

– des moyens de l'alimentation-recyclage du bain des bacs d'élevage;
– des moyens de régulation de la température du circuit d'alimentation;
– des moyens de distribution d'aliment;
et caractérisé en outre en ce qu'il comporte au moins deux récipients d'élevage mobiles, disposés en regard l'un de l'autre, et associés à des moyens de levier permettant de déverser un récipient dans l'autre, ces récipients étant pourvus sur leurs parois latérales d'au moins deux zones, distinctes et séparées l'une de l'autre, la première étant destinée à l'écoulement du liquide d'élevage et conformée pour retenir les larves à l'intérieur du récipient, tandis que la seconde est destinée au transvasement des larves.

La zone d'écoulement du bain d'élevage est avantageusement constituée par au moins un passage obtenu par un treillis dont l'ouverture des mailles ne permet pas le passage des larves.

Selon une forme de réalisation particulière de l'invention, chaque récipient d'élevage mobile est emboîté dans un récipient extérieur équipé d'un trop plein servant à régler le niveau du liquide d'élevage.

Selon encore une autre forme de réalisation, le récipient d'élevage mobile comporte une zone d'accueil évitant toute mise à sec des larves.

Comme bain d'élevage, on peut envisager divers milieux aquatiques, par exemple de l'eau de mer, de l'eau douce ou des solutions aqueuses physiologiques compatibles avec la vie ou le développement des larves.

Comme aliment, on peut utiliser toutes sortes d'aliments convenant au développement des larves considérées, par exemple des poudres sèches à base de levure, de foie de porc lyophilisé, de foie de bœuf lyophilisé, d'huile de foie de morue, de mélanges vitaminiques, de mélanges minéraux et/ou organiques, en combinaison appropriée, cette liste d'aliments n'étant pas limitative.

Ainsi, l'invention apporte une solution à l'élevage de larves d'animaux aquatiques, en particulier celui de petites larves, qu'il était jusqu'à présent impossible de nourrir avec des aliments artificiels. L'invention peut être mise en œuvre dans des conditions de température quelconques, alors que les techniques d'élevage connues, telles que celles destinées aux truites et aux salmonidés, utilisaient de l'eau froide, dans laquelle les problèmes de croissance de la microflore et de pollution correspondante ne se posent pas d'une manière aussi sérieuse que dans des conditions d'élevage à la température quelconque compatible avec le développement des larves, par exemple entre 15 et 30 °C.

On sait également qu'il est préférable de prévoir en permanence un excès de nourriture, dont les larves ont besoin au cours de leur phase précoce de développement. Ainsi qu'on l'a indiqué précédemment, il est avantageux d'utiliser des aliments ayant une taille homogène de particules, de préférence dans la gamme de 100 à 200 microns environ.

L'invention est applicable à l'élevage de toutes sortes de larves non fixées d'animaux se développant en milieu aquatique. Les larves non fixées sont celles qui ne se collent pas aux parois des équipements utilisés pour l'élevage. Ces larves non fixées peuvent être des larves de poissons, de crustacés, ou d'insectes. L'invention s'applique avec le plus d'avantages aux larves d'animaux dont la taille est inférieure à 10 mm environ. L'homme de métier sait qu'une dimension de 10 mm environ mesurée le long de la larve correspond à une taille de l'œuf d'environ 2 à 3 mm. L'invention est donc utile pour l'élevage des larves dans leur phase précoce de développement. Elle est spécialement intéressante pour l'élevage de larves de poissons, tels que le bar, le turbot, la daurade, la morue, la carpe et autres. A titre illustratif, la dimension des larves de bar est de 4,5 mm environ et celle des larves de daurade ou de morue est de 3 mm environ. De telles larves étaient impossibles à élever avec des aliments artificiels dans des conditions pratiquement utilisables.

L'invention permet une distribution dosée et légèrement surabondante de nourriture. On est ainsi assuré que les larves disposent d'une quantité de nourriture suffisante. Le léger excès de nourriture n'est pas préjudiciable, car l'invention permet un changement périodique du bain d'élevage.

La périodicité du changement varie selon la salissure et le développement de la microflore. A titre d'exemple, dans le cas de la carpe, un changement quotidien est approprié. L'homme du métier peut, par des essais de routine, déterminer la périodicité à adopter pour chaque espèce de larve en tenant compte également des conditions particulières de l'élevage, notamment de la nature de l'aliment.

L'invention fait appel à une conception originale des bacs ou cuvettes d'élevage. On notera à cet égard qu'il est déjà connu d'utiliser des bacs à fond perforé, en particulier pour l'élevage des larves de salmonidés. De tels bacs ne peuvent pas convenir aux besoins de l'invention, surtout s'il s'agit d'élever de petites larves en raison des dommages causés aux larves.

Ainsi qu'on l'a indiqué précédemment, l'invention prévoit deux récipients d'élevage mobiles, de préférence sous forme de bacs internes, chaque bac interne étant contenu dans un bac externe. Le bac externe a pour seule fonction de contenir le milieu aquatique ou bain d'élevage. Le bac interne ne peut consister en une cage entièrement grillagée, qui aurait pour conséquence d'endommager les larves lors du changement de bain. L'invention prévoit donc que le bac interne comporte au moins en partie une face latérale sous forme d'un tamis. La dimension des mailles du tamis n'est pas critique. Elle est adaptée au type particulier de larves à élever. Il est suffisant que cette dimension soit choisie pour éviter le colmatage tout en évitant le passage des larves.

L'orientation des tamis sur les faces latérales n'est pas non plus critique. On a constaté cependant dans la pratique que l'on obtenait d'excellents résultats avec des faces latérales comportant un tamis partiel orienté obliquement par rapport au plan horizontal, lesdites faces entourant une autre face ayant presque entièrement une structure de tamis.

Le bac interne d'élevage peut comporter une seule face latérale ainsi munie d'un tamis. Il est intéressant cependant que les deux faces latérales du bac, qui avoisinent la paroi de déversement, soient ainsi aménagées avec une structure au moins partielle de tamis.

On peut concevoir des variantes du bac d'élevage sans pour autant s'écarter du concept inventif de la présente invention. Il importe seulement de prévoir, sous la forme définie à la revendication 1, un ensemble de deux récipients d'élevage mobiles, chacun étant éventuellement un bac interne, ce dernier étant conformé pour permettre le déversement du bain d'élevage tout en conservant les larves dans le fond, sans pour autant les priver totalement du bain liquide.

Le bac externe contenant un bac interne d'élevage est formé de parois continues, sauf orifice(s) de trop-plein pour l'évacuation du bain.

On notera aussi qu'un bac externe peut contenir un seul bac interne de dimensions correspondantes ou une pluralité de tels bacs. Cette dernière forme de réalisation est avantageuse en aquaculture industrielle.

L'invention permet de concilier une distribution légèrement surabondante de nourriture et le maintien de l'hygiène du bain d'élevage des larves d'animaux aquatiques, en particulier des poissons et des crustacés, grâce à l'interruption du développement de la microflore par suite du changement du bain d'élevage.

Dans le cas des poissons, notamment, on peut ainsi réaliser une production très régulière, qui est de plus indépendante des saisons. Les larves développées grâce au procédé de l'invention atteignent une taille suffisante pour être ensuite introduites dans les milieux de grand élevage, par exemple des étangs, jusqu'au stade final du poisson. La qualité des poissons ainsi obtenus est parfaite. On n'a constaté aucune déformation ou anomalie physiologique. Les conditions optimales pour un bon développement précoce des larves sont donc ainsi remplies par l'invention.

D'autres avantages et caractéristiques de l'invention apparaîtront à la lecture de la description suivante d'un mode de réalisation purement illustratif, et qui ne limite l'invention en aucune manière, cette description étant faite en référence aux dessins annexés sur lesquels:

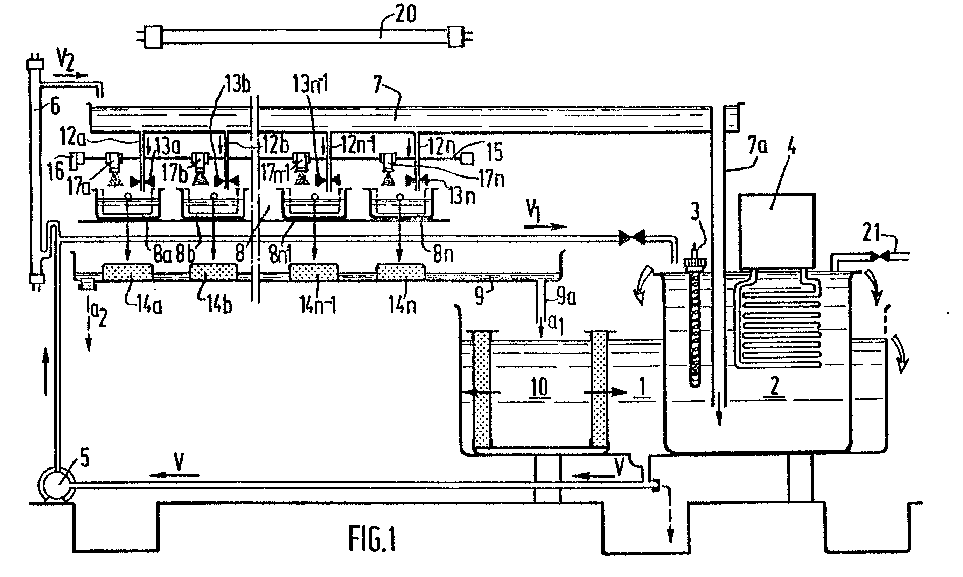

Fig. 1 est une vue schématique d'ensemble d'une installation d'élevage de larves d'animaux aquatiques selon l'invention;

Fig. 2 est une vue en perspective d'une forme de réalisation de bac d'élevage selon l'invention;

Fig. 3 est une vue schématique en coupe longitudinale axiale de la forme de réalisation de la figure 2;

Fig. 4 est une vue schématique partielle d'un bac de la figure 3, en position de nettoyage; et

Fig. 5 est une vue schématique de dessus de la forme de réalisation de la figure 2.

Le dispositif ou installation d'élevage selon la présente invention fonctionne sur le principe du circuit fermé. Ce circuit est constitué d'un bassin 1 servant de réserve du milieu ambiant, par exemple de l'eau, dans lequel est placé un bac 2 servant à la régulation thermique du circuit, par l'intermédiaire d'une résistance chauffante 3, par exemple de 2 Kw, et d'un groupe réfrigérateur 4 fonctionnant sous une puissance de 0,5 CV.

Le contenu du bac de régulation 2 s'écoule par débordement dans le bassin 1, les éléments de régulation restant ainsi toujours immergés en cas de coupure de courant. L'ensemble constitué par le bassin 1 et le bac 2 renferme une quantité de 1500 litres environ. Un groupe moto-pompe 5 comportant par exemple une pompe centrifuge, placée en charge à l'extérieur du bassin 1 assure la circulation de l'eau dans l'ensemble, avec, par exemple, un débit maximal V de 3000 litres par heure. Comme représenté sur le dessin, la plus grande partie du débit V1 revient directement dans le bac de régulation 2 en assurant ainsi l'homogénéisation de la température. Une petite partie du débit V2, par exemple de l'ordre de 500 litres par heure, passe par une lampe germicide à ultraviolets 6 et s'écoule dans une gouttière axiale de distribution 7 dont le niveau est maintenu constant grâce à une surverse 7a qui évacue le trop-plein dans le bac de régulation 2.

Cette gouttière 7 alimente par gravité, par l'intermédiaire de tuyaux d'alimentation 12a, 12b ... 12n − 1, 12n, coopérant avec des vannes respectives 13a, 13b ... 13n − 1, 13n, deux séries de bacs d'élevage 8a, 8b, ... 8n − 1, 8n respectivement. La gouttière 7 est surmontée d'une rampe 20 d'éclairage programmé.

Le trop-plein de chaque bac d'élevage s'écoule respectivement sur des blocs de matière plastique expansée, par exemple de la mousse de polyéther, 14a, 14b, ... 14n − 1, 14n, respectivement disposés dans une gouttière d'évacuation 9, cette série de blocs de matière expansée servant de moyen de préfiltrage pour l'installation. Il est clair que pour l'ensemble du circuit, il existe deux gouttières d'évacuation distinctes qui correspondent aux deux séries de bacs d'élevage 8 et aboutissent à deux dispositifs de filtrage (10) immergés dans le bassin 1. Ces filtres verticaux 10 ont été réalisés selon le principe de Terver, c'est-à-dire qu'ils sont constitués de quatre parois verticales en mousse de polyéther filtrante, coulissant dans un système de glissières.

Il convient de remarquer que l'installation de l'invention peut fonctionner en circuit ouvert avec une arrivée d'eau annexe 21 directement dans le bac de régulation 2. Dans cette forme de réalisation, la sortie a1 de la gouttière d'évacuation 9 est alors condamnée et le bouchon de vidange a2 permet l'élimination de l'eau des bacs d'élevage à l'extérieur. Un tel système peut être utilisé de la même manière pour les traitements chimiques éventuels ce qui évite de «détruire» les filtres biologiques.

Entre la gouttière 7 et chaque série de bacs 8, est monté un système distributeur d'aliments constitué par un certain nombre de tubes distributeurs 17a, 17b ... 17 − n1, 17n à raison d'un tube distributeur d'aliments par bac. Ces tubes distributeurs 17 sont montés sur un arbre 15 actionné en rotation par un motoréducteur 16 ayant une vitesse de rotation d'un tour par minute et couplé soit à un relais temporisé électrique, soit à un système programmateur à cames, de conception plus robuste, non représenté au dessin. Le principe de ce distributeur permet de faire varier à volonté la quantité d'aliments distribuée grâce au réglage d'une part, du cycle de distribution et, d'autre part, de l'ouverture de la fente de distribution prévue sur chaque distributeur. Chaque tube distributeur peut coopérer avec un dispositif à secousses non représenté au dessin.

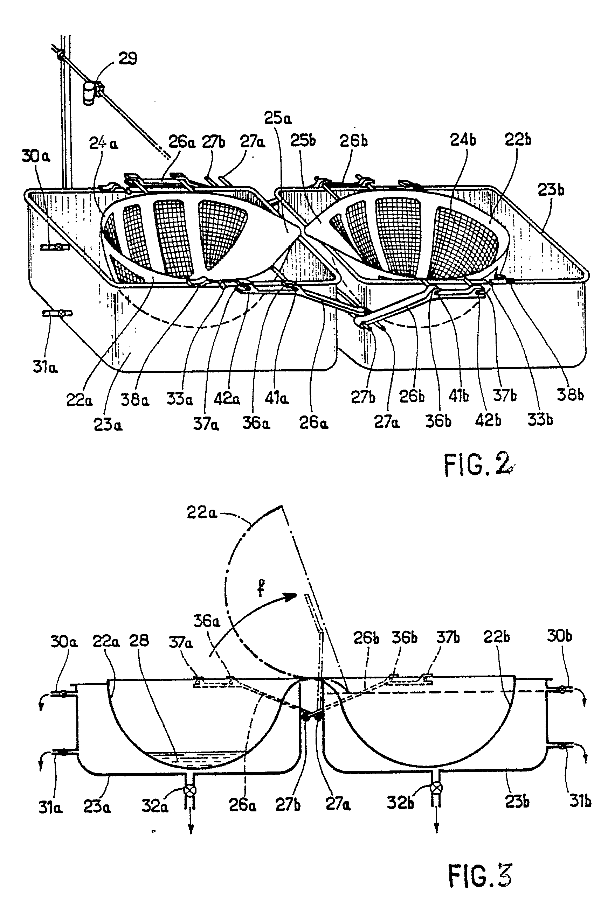

Les figures 2 à 5 illustrent la forme de réalisation originale de l'invention. Dans cette installation, les bacs sont disposés en une double rangée. Chaque bac intérieur 22a, 22b est placé dans un bac extérieur fixe 23a, 23b, de façon à pouvoir être mobile à la fois en translation et en rotation par rapport à ce dernier. Chaque bac interne 22a, 22b est pourvu d'un certain nombre de fenêtres latérales 24a, 24b obturées par des tamis, et possède une zone spécialisée ou bec verseur de transvasement 25.

Par l'intermédiaire d'une paire de leviers 26a, 26b par bac 22a, 22b, ces leviers étant solidaires d'axes rotatifs 27a, 27b, on peut imprimer à chaque bac 22a, 22b, un mouvement de pivotement vers l'extérieur hors du bac externe 23a, 23b, respectivement. Chaque levier latéral 26a, 26b est pourvu d'une paire de fourches formant butées 36a, 36b; 37a, 37b, dans lesquelles viennent s'engager par translation les tiges-supports respectives 41a, 41b; 42a, 42b des bacs 22a, 22b dans les bacs externes 23a, 23b.

Cette forme de réalisation permet à chaque bac interne 22a, 22b, d'être placé dans trois positions différentes.

Dans la position de transvasement représentée aux figures 2 et 3, le bac interne 22a, 22b est alors engagé par l'intermédiaire de ces tiges-supports 41a, 41b; 42a, 42b dans les fourches respectives 36a, 36b; 37a, 37b des leviers latéraux 26a, 26b. On notera que les mêmes axes 27a, 27b peuvent servir à toute une rangée de bacs. La position des axes 27a, 27b ainsi que la forme des bacs sont des paramètres importants à considérer pour minimiser la hauteur de chute des larves. Une rotation lente des axes 27a, 27b peut être assurée soit manuellement par un système de timonerie approprié, soit automatiquement au moyen d'un motoréducteur, non représenté au dessin, de façon à ce que le transvasement progressif de l'eau résiduelle 28 et des larves se fasse dans de bonnes conditions selon la flèche f, le bac 22a et le levier 26a prenant alors la position représentée en pointillés sur ladite figure 3.

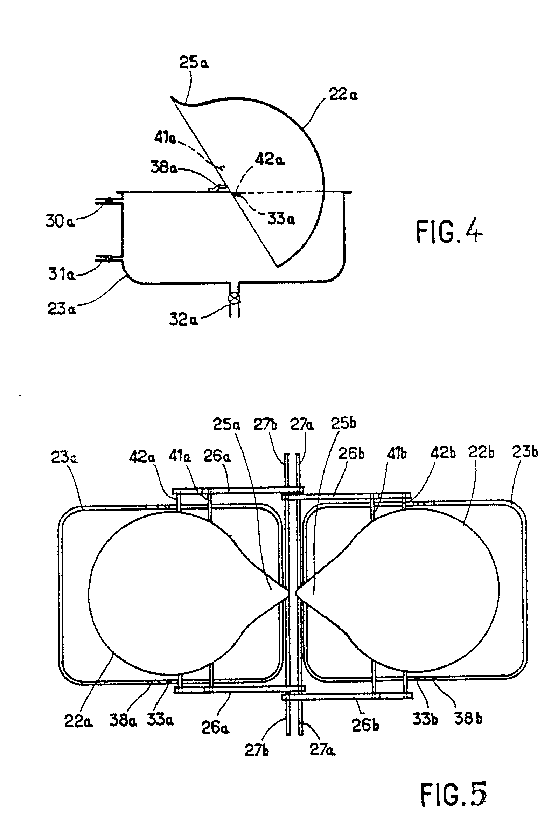

Dans la position de nettoyage, telle que représentée schématiquement sur la figure 4, le bac 22a est pivoté en sens inverse du pivotement de transvasement, par translation préalable dudit bac 22a de façon que la tige-support 42a vienne en aboutement contre les butées 38a prévues sur les arêtes supérieures latérales du bac 23a, et servent de pivots au bac 22a qui prendra la position de nettoyage représentée sur la figure 6. Le bac 22b par un mouvement translationnel identique pourra également venir en aboutement contre les butées 38b prévues sur le bac externe 23b par l'intermédiaire de sa tige-support 42b qui servira également de pivot pour lui faire prendre la position de lavage appropriée.

Les faces intérieures des bacs 22a, 22b pourront être ainsi soumises à un nettoyage au moyen par exemple d'un jet d'eau chaude.

Dans la position d'élevage, les bacs intérieurs 22a, 22b seront bloqués par leurs tiges-supports respectives 42a, 42b dans des logements 33a, 33b ménagés sur les arêtes supérieures longitudinales des bacs externes 23a, 23b, respectivement, de façon à se placer au-dessous du distributeur automatique d'aliments 29.

Il est ainsi possible de transvaser en même temps une partie des bacs d'une rangée (ceux qui sont enclenchés en position de transvasement) sans transvaser toute la rangée pour autant. Il est clair que les bacs laissés en position d'élevage ne sont pas affectés par le mouvement des supports. On remarquera en outre que cette installation peut être en grande partie automatisée, ce qui réduit d'autant la main-d'œuvre nécessaire à l'élevage des larves. Par ailleurs, sur les bacs 23a, 23b sont prévues différentes vannes 30a, 30b; 31a, 32a, 32b qui permettent de récupérer l'eau des bacs d'élevage et de la recycler (30a, 30b; 31a, 31b) ou d'évacuer l'eau du nettoyage (32a, 32b).

En utilisant le dispositif de l'invention, on a réalisé une expérimentation portant sur un élevage de larves de carpes, en opérant comme décrit ci-dessous.

Des larves de carpe commune (Cyprinus carpio L.) ont été élevées en utilisant uniquement des aliments artificiels.

Les régimes qui ont donné dans ce cas les meilleurs résultats avaient la composition suivante (% en poids):

|  | Régime A | Régime B |
|---|---|---|
| Levure* | 45 | 45 |
| Foie de porc lyophilisé | 40 | – |
| Foie de bœuf lyophilisé | – | 40 |
| Huile de foie de morue | 5 | 5 |
| Mélange vitaminique | 5 | 5 |
| Mélange minéral | 5 | 5 |

*poudre sèche de levure cultivée sur méthanol (Institut Français du Pétrole).

Quatre lots de larves, provenant de la ponte d'une même femelle fécondée artificiellement par deux mâles $M_1$ et $M_2$, ont reçu depuis leur premier repas les régimes A et B sous forme de particules de taille croissante (100–200 μ, 200–400 μ). Après 4 semaines d'alimentation, les résultats suivants ont été obtenus:

|  | Poids moyen (mg) | Effectif | Effectif théorique |
|---|---|---|---|
| Bac 1 ($M_1$, rég.A) | 242 | 91 | 100 |
| Bac 2 ($M_2$, rég.A) | 352 | 82 | 100 |

(Continuation)

|  | Poids moyen (mg) | Effectif | Effectif théorique |
|---|---|---|---|
| Bac 3 ($M_1$, rég.B) | 266 | 91 | 100 |
| Bac 4 ($M_2$, rég.B) | 440 | 91 | 100 |

L'effectif initial était de 160 larves/bac. 60 poissons (20 par semaine) ont été prélevés dans chaque bac pour l'étude histologique. La température a été augmentée de 20 °C en début d'expérience, à 23 °C en fin d'expérience.

L'expérience ne comportait pas de témoins nourris au zooplancton pour éviter toute contamination accidentelle des bacs nourris avec les aliments artificiels mais seulement un témoin «à jeun» où la mortalité a été totale en 10 jours.

Ces résultats sont comparables à ceux obtenus par d'autres auteurs avec du zooplancton (cf. Dabrowski, 1982).

Ainsi, se trouve résolu, selon la présente invention, le problème posé en aquaculture et non résolu jusqu'à présent, par l'élevage de larves d'animaux aquatiques.

**Revendications**

1. Dispositif destiné à l'élevage de larves d'animaux aquatiques dans leur stade précoce de développement, et à permettre l'interruption du développement de la microflore et/ou des parasites par changement de milieu des larves, ce dispositif comportant:
   − des moyens d'alimentation-recyclage du bain des bacs d'élevage;
   − des moyens de régulation de la température du circuit d'alimentation;
   − des moyens de distribution d'aliment
et caractérisé en outre en ce qu'il comporte au moins deux récipients d'élevage mobiles (22a, 22b), disposés en regard l'un de l'autre, et associés à des moyens de levier (26a, 26b) permettant de déverser un récipient dans l'autre, ces récipients étant pourvus sur leur parois latérales d'au moins deux zones, distinctes et séparées l'une de l'autre, la première (24a, 24b) étant destinée à l'écoulement du liquide d'élevage et conformée pour retenir les larves à l'intérieur du récipient, tandis que la seconde (25a, 25b) est destinée au transvasement des larves.

2. Dispositif selon la revendication 1 caractérisé en ce que chaque récipient d'élevage mobile (22a, 22b) est emboîté dans un récipient extérieur (23a, 23b) équipé d'un trop-plein (30a, 30b) servant à régler le niveau du liquide d'élevage.

3. Dispositif selon l'une quelconque des revendications 1 et 2 caractérisé en ce que chaque récipient d'élevage mobile (22a, 22b) comporte une zone d'accueil (28) évitant toute mise à sec des larves.

4. Dispositif selon la revendication 1, caractérisé en ce que la zone d'écoulement du liquide d'élevage est avantageusement constituée par au moins un passage fermé par un treillis dont l'ouverture des mailles ne permet pas le passage des larves.

**Claims**

1. Device intended for rearing larvae of aquatic animals in their early stage of development, and for permitting the development of the microflora and/or of the parasites to be stopped by changing the medium of the larvae, this device comprising:
   − means for feeding-recycling the bath of the rearing tanks;
   − means for controlling the temperature of the feed circuit;
   − means for distributing food
and additionally characterized in that it comprises at least two movable rearing containers (22a, 22b) arranged facing one another and combined with means of leverage (26a, 26b) allowing one container to be poured over into the other, these containers being provided on their side walls with at least two zones which are distinct and separated from each other, the first (24a, 24b) being intended for the flow of the rearing liquid and shaped so as to retain the larvae inside the container, while the second (25a, 25b) is intended for transferring the larvae.

2. Device according to Claim 1, characterized in that each movable rearing container (22a, 22b) is encased in an external container (23a, 23b) equipped with an overflow (30a, 30b) used to control the level of the rearing liquid.

3. Device according to either of Claims 1 and 2, characterized in that each movable rearing container (22a, 22b) comprises a reception zone (28) preventing any exposure of the larvae to dryness.

4. Device according to Claim 1, characterized in that the flow zone of the rearing liquid consists advantageously of at least one passage closed by a trellis whose mesh opening does not permit the larvae to pass.

**Patentansprüche**

1. Vorrichtung, die für die Züchtung von Larven von Wassertieren in ihrem frühen Entwicklungsstadium bestimmt ist und die die Unterbrechung der Entwicklung einer Mikroflora und/oder von Parasiten durch das Wechseln des Milieus der Larven erlaubt, wobei die Vorrichtung umfaßt:
   − Mittel zur Nährstoff-Zurückgewinnung aus dem Aufzuchtbehälter;

– Mittel zur Regulierung der Temperatur des Nährstoffstroms;

– Mittel zur Verteilung der Nährstoffe, außerdem dadurch gekennzeichnet, daß sie wenigstens zwei bewegliche Aufzuchtbehälter (22a, 22b) umfaßt, die einander gegenüberstehend angeordnet und mit Hebevorrichtungen (26a, 26b) verbunden sind, die es erlauben, einen Behälter in den anderen zu entleeren, wobei diese Behälter auf ihren Seitenwänden wenigstens zwei Zonen haben, die voneinander unabhängig und getrennt sind, wobei die erste (24a, 24b) zum Abfließen der Aufzuchtflüssigkeit bestimmt ist und zum Zurückhalten der Larven im Inneren des Behälters angepaßt ist, während die zweite (25a, 25b) zum Umfüllen der Larven bestimmt ist.

2. Vorrichtung nach Anspruch 1, dadurch gekennzeichnet, daß jeder bewegliche Aufzuchtbehälter (22a, 22b) in einen äußeren Behälter (23a, 23b) eingefügt ist, der mit einem Überfluß (30a, 30b) ausgestattet ist, der zum Regulieren des Aufzuchtflüssigkeit-Standes dient.

3. Vorrichtung nach irgendeinem der Ansprüche 1 und 2, dadurch gekennzeichnet, daß jeder bewegliche Aufzuchtbehälter (22a, 22b) eine Aufnahmezone (28) umfaßt, die jegliches Austrocknen der Larven verhindert.

4. Vorrichtung nach Anspruch 1, dadurch gekennzeichnet, daß die Abflußzone der Aufzuchtflüssigkeit vorteilhaft aus wenigstens einer Passage besteht, die durch einen Drillich geschlossen ist, dessen Maschen den Durchgang der Larven nicht erlauben.

20

$V_2$

6

13b  13m1  7

12a  13a  12b  13m1  12n-1  12n  15

16  17b  17m1  17n

17a  13n

$V_1$  7a  4

3

8a 8b  8'  8m1  8n

14a  14b  14n-1  14n  9  9a

21

$a_2$

$a_1$

10  1  2

5

V

V

FIG.1

FIG.2

FIG.3

FIG.4

FIG.5